# EUROPEAN PATENT APPLICATION

(11) **EP 3 367 477 A1**
(43) Date of publication of application: **29.08.2018**
(21) Application number: 18156365.1
(22) Date of filing: 12.02.2018
(51) Int. Cl.: H01M 4/04, H01M 4/139, H01M 4/36, H01M 4/38, C25D 3/30, C25D 5/10, C25D 15/00, H01M 4/133, H01M 4/134, H01M 4/1395, C25D 5/12, C25D 5/34, C25D 7/00

(54) **METHOD FOR PREPARING NEGATIVE ELECTRODE OF LITHIUM ION BATTERY AND LITHIUM ION BATTERY**

(30) Priority: 22.02.2017 CN 201710097060
(71) Applicant: Optimum Battery Co., Ltd., Shenzhen City, Guangdong 518118 (CN)
(72) Inventor: TANG, Chao, Shenzhen, Guangdong 518118 (CN); RAO, Mu min, Shenzhen, Guangdong 518118 (CN); DENG, Chang yuan, Shenzhen, Guangdong 518118 (CN); RONG, Liang bin, Shenzhen, Guangdong 518118 (CN)
(74) Representative: Greaves Brewster LLP

(57) **Abstract**

The present application provides a method for preparing negative electrode of lithium ion battery, wherein a negative electrode is obtained by plating a stannum-silicon composite layer and a stannum-carbon composite layer on the surface of a negative current collector. The negative electrode prepared according to the present application could solve the problem of large volume change during charge and discharge processes, so as to improve the cycle performance. The present application also provides a lithium ion battery using the negative electrode mentioned above. The lithium ion battery provided according to the present application has characteristics of high energy density, good charge and discharge performance, and good cycle performance.

## Description

### BACKGROUND OF THE INVENTION

### Field of the Invention

The present application generally relates to lithium ion batteries and, more particularly, to a method for preparing negative electrode of lithium ion battery and a lithium ion battery.

### Description of the Related Art

Lithium ion batteries have been widely used in electric vehicles and other fields because of their advantages of high energy density, high voltage and long service life. With the rapid development of electric vehicles, energy density of lithium ion batteries are required to be improved, therefore, active materials for negative electrode and positive electrode of lithium ion batteries are required to have higher energy density. At present, a main active material for negative electrode of lithium ion battery is carbon, however, the theoretical capacity of carbon is 372mAh/g and it is difficult for carbon to obtain a breakthrough in practical capacity because of its low theoretical capacity.

Compared with carbon materials, silicon has a much higher theoretical capacity (4200mAh/g) and a higher discharge platform. In addition, stannum could reversibly form alloys with lithium and the theoretical capacity may reach 990mAh/g, which make stannum a potential negative electrode material for lithium ion battery to replace carbon. However, active materials with silicon and stannum have large volume change during the charge and discharge processeses, resulting in problems of disintegration of particles, rapid decline of capacity and poor cycle performance of lithium ion batteries.

In view of the foregoing, what is needed, therefore, is to provide a method for preparing negative electrode of lithium ion battery and a lithium ion battery, so as to overcome the defects as detailed above.

### SUMMARY OF THE INVENTION

One object of the present application is to provide a method for preparing negative electrode of lithium ion battery that could solve the problem of large volume change of negative electrode during charge and discharge processeses, and to provide a lithium ion battery including the negative electrode prepared according to the present application.

According to one embodiment of the present application, a method for preparing negative electrode of lithium ion battery including steps of:
1) adding a complexing agent, a stannum salt, a reducing agent, a grain refiner, a dispersing agent and a metal salt to water, and stirring to obtain a first plating solution;
2) immersing a copper foil in a chemical degreasing solution, removing the copper foil from the chemical degreasing solution and washing by water, and then immersing the copper foil in an activating solution, removing the copper foil from the activating solution and washing by water to obtain a negative current collector;
3) dispersing a silicon-based material into the first plating solution, stirring and ultrasonic treating to obtain a second plating solution;
4) taking the negative current collector as a cathode and immersing the negative current collector and an anode in the second plating solution, plating with a direct current to obtain a negative current collector coated with a stannum-silicon composite layer;
5) dispersing a carbon-based material into the first plating solution, stirring and ultrasonic treating to obtain a third plating solution;
6) taking the negative current collector coated with a stannum-silicon composite layer as a cathode and immersing the negative current collector coated with a stannum-silicon composite layer and an anode in the third plating solution, plating with a direct current to obtain a negative electrode, wherein the negative electrode is a negative current collector coated with a stannum-silicon composite layer and a stannum-carbon composite layer.

The negative electrode prepared according to the present application has high energy density, good charge and discharge performance, and good cycle performance. Compared with the prior art, the method for preparing negative electrode provided by the present application could prepare the negative electrode without binder and conductive agent, so as to reduce production cost.

According to one aspect of the present application, a concentration of the complexing agent in the first plating solution is 100-300g/L; a concentration of the stannum salt in the first plating solution is 20-80g/L; a concentration of the reducing agent in the first plating solution is 3-20g/L; a concentration of the grain refiner in the first plating solution is 0.1-5g/L; a concentration of the dispersing agent in the first plating solution is 1-10g/L; a concentration of the metal salt in the first plating solution is 0.1-50g/L.

According to one aspect of the present application, the complexing agent is selected from a group consisting of ethylene diamine tetraacetic acid, thiourea, allylthiourea, ethylenediamine, tetraethylenepentamine, sulfur-containing amino acid, and combinations thereof.

According to one aspect of the present application, the stannum salt is selected from a group consisting of stannaic sulphate, stannaic borofluoride, stannaic silicofluoride, stannaic sulfamate, stannaic hydrochloride, stannaic pyrophosphate, stannaic acetate, stannaic oxalate, stannaic malonate, stannaic succinate, stannaic glycolate, stannaic tartrate, stannaic citrate, and combinations thereof.

According to one aspect of the present application, the reducing agent is selected from a group consisting of catechol, resorcinol, hydroquinone, pyrogallol, hydroxy-hydroquinone, fluoroglycine, cresolsulfonic acid, catechol sulfonic acid, hydroquinone sulfonic acid, and combinations thereof.

According to one aspect of the present application, the metal salt is inorganic salt, organic salt or complex of silver, copper, gold, zinc, nickel or lead.

According to one aspect of the present application, the anode of step 4) is a stannum plate with a purity of 99.9% or a titanium plate with a purity of 99.9% or a stainless steel plate with a purity of 99.9%; the anode of step 6) is a stannum plate with a purity of 99.9% or a titanium plate with a purity of 99.9% or a stainless steel plate with a purity of 99.9%.

According to one aspect of the present application, the chemical degreasing solution consists of sodium hydroxide, sodium carbonate, sodium silicate and water.

According to one aspect of the present application, a concentration of the sodium hydroxide in the chemical degreasing solution is 5-10g/L; a concentration of the sodium carbonate in the chemical degreasing solution is 15-20g/L; a concentration of the sodium silicate in the chemical degreasing solution is 15-20g/L.

According to one aspect of the present application, the copper foil is immersed in the chemical degreasing solution at a temperature of 60-70°C for 3-5min.

According to one aspect of the present application, the activating solution is composed of sulfuric acid solution and hydrogen peroxide or hydrochloric acid solution and hydrogen peroxide.

According to one aspect of the present application, the sulfuric acid solution has a mass fraction of 10-20%; the hydrochloric acid solution has a mass fraction of 10-20%; the hydrogen peroxide has a mass fraction of 1-2%.

According to one aspect of the present application, the copper foil is immersed in the activating solution for 1-3min at room temperature.

According to one aspect of the present application, the silicon-based material is selected from a group consisting of nanometer silica, nanometer silicon, silicon nanotubes, porous silicon, and combinations thereof.

According to one aspect of the present application, the carbon-based material is selected from a group consisting of carbon nanotubes, carbon nanofibers, carbon nanospheres, graphene, graphite, and combinations thereof.

According to one aspect of the present application, a mass fraction of the silicon-based material in the second plating solution is 5%-10%; a volume fraction of the silicon-based material in the stannum-silicon composite layer is 10%-20%.

According to one aspect of the present application, a mass fraction of the carbon-based material in the third plating solution is 10%-20%; a volume fraction of the carbon-based material in the stannum-carbon composite layer is 20%-40%.

According to one aspect of the present application, the direct current of step 4) has a current density of 1-5A/dm² and the plating time is 5-10min; the direct current of step 6) has a current density of 2-3A/dm² and the plating time is 5-10min.

According to one aspect of the present application, the ultrasonic treating process of step 3) is carried out for 1-3h in an ultrasonic generator at a internal temperature of 40-60°C; the ultrasonic treating process of step 5) is carried out for 1-3h in an ultrasonic generator at a internal temperature of 40-60 °C.

One embodiment of the present application provides a lithium ion battery comprising a shell having an opening at one end, a winding core positioned in the shell, electrolyte received in the shell and immersing the winding core, and a cap cover positioned in the opening for enclosing the opening; the winding core comprising a positive electrode, separators and a negative electrode prepared according to the method for preparing negative electrode of lithium ion battery of the present application.

The lithium ion battery provided by the present application has high energy density, good charge and discharge performance, and long cycle life.

### BRIEF DESCRIPTION OF THE DRAWINGS

FIG. 1 depicts a schematic view of the negative electrode of the present application;
FIG. 2 depicts a schematic view of the lithium ion battery of the present application;
FIG. 3 depicts a SEM image of a stannum-silicon composite layer prepared according to an example of the present application;
FIG. 4 depicts a SEM image of a stannum-carbon composite layer prepared according to an example of the present application; and
FIG. 5 depicts cycle diagrams of lithium ion batteries prepared according to an example of the present application.

### DETAILED DESCRIPTION OF THE PREFERRED EMBODIMENTS

In order that the objects, technical solution and technical effects of the present application can be understood more clearly, the present application will be described in more detail with reference to the accompanying drawings and examples. It should be understood that the specific examples described herein are illustrative only and are not intended to limit the present application.

According to one embodiment of the present application, a method for preparing negative electrode of lithium ion battery including steps of:
1) adding a complexing agent, a stannum salt, a reducing agent, a grain refiner, a dispersing agent and a metal salt to water, and stirring to obtain a first plating solution;
2) immersing a copper foil in a chemical degreasing solution, removing the copper foil from the chemical degreasing solution and washing by water, and then immersing the copper foil in an activating solution, removing the copper foil from the activating solution and washing by water to obtain a negative current collector;
3) dispersing a silicon-based material into the first plating solution, stirring and ultrasonic treating to obtain a second plating solution;
4) taking the negative current collector as a cathode and immersing the negative current collector and an anode in the second plating solution, plating with a direct current to obtain a negative current collector coated with a stannum-silicon composite layer;
5) dispersing a carbon-based material into the first plating solution, stirring and ultrasonic treating to obtain a third plating solution;
6) taking the negative current collector coated with a stannum-silicon composite layer as a cathode and immersing the negative current collector coated with a stannum-silicon composite layer and an anode in the third plating solution, plating with a direct current to obtain a negative electrode, wherein the negative electrode is a negative current collector coated with a stannum-silicon composite layer and a stannum-carbon composite layer.

Specifically, in step 1), a concentration of the complexing agent in the first plating solution is 100-300g/L; a concentration of the stannum salt in the first plating solution is 20-80g/L; a concentration of the reducing agent in the first plating solution is 3-20g/L; a concentration of the grain refiner in the first plating solution is 0.1-5g/L; a concentration of the dispersing agent in the first plating solution is 1-10g/L; a concentration of the metal salt in the first plating solution is 0.1-50g/L.

Specifically, in step 1), the complexing agent is selected from a group consisting of ethylene diamine tetraacetic acid, thiourea, allylthiourea, ethylenediamine, tetraethylenepentamine, sulfur-containing amino acid, and combinations thereof; the stannum salt is selected from a group consisting of stannaic sulphate, stannaic borofluoride, stannaic silicofluoride, stannaic sulfamate, stannaic hydrochloride, stannaic pyrophosphate, stannaic acetate, stannaic oxalate, stannaic malonate, stannaic succinate, stannaic glycolate, stannaic tartrate, stannaic citrate, and combinations thereof; the reducing agent is selected from a group consisting of catechol, resorcinol, hydroquinone, pyrogallol, hydroxy-hydroquinone, fluoroglycine, cresolsulfonic acid, catechol sulfonic acid, hydroquinone sulfonic acid, and combinations thereof; the metal salt is inorganic salt, organic salt or complex of silver, copper, gold, zinc, nickel or lead.

Specifically, in step 2), the copper foil is immersed in the chemical degreasing solution at a temperature of 60-70°C for 3-5min, wherein the chemical degreasing solution consists of sodium hydroxide, sodium carbonate, sodium silicate and water. More specifically, a concentration of the sodium hydroxide in the chemical degreasing solution is 5-10g/L; a concentration of the sodium carbonate in the chemical degreasing solution is 15-20g/L; a concentration of the sodium silicate in the chemical degreasing solution is 15-20g/L.

Specifically, in step 2), the copper foil is immersed in the activating solution for 1-3min at room temperature, wherein the activating solution is composed of sulfuric acid solution and hydrogen peroxide or hydrochloric acid solution and hydrogen peroxide. More specifically, the sulfuric acid solution has a mass fraction of 10-20%; the hydrochloric acid solution has a mass fraction of 10-20%; the hydrogen peroxide has a mass fraction of 1-2%.

Specifically, in step 3), a mass fraction of the silicon-based material in the second plating solution is 5%-10%, and the silicon-based material is selected from a group consisting of nanometer silica, nanometer silicon, silicon nanotubes, porous silicon, and combinations thereof.

Specifically, in step 3), the stirring process is taken under a stirring speed of 1000-1500rmp and the ultrasonic treating process is carried out for 1-3h in an ultrasonic generator at a internal temperature of 40-60 °C.

Specifically, in step 4), the anode is a stannum plate with a purity of 99.9% or a titanium plate with a purity of 99.9% or a stainless steel plate with a purity of 99.9%. In step 4), the direct current has a current density of 1-5A/dm² and the plating time is 5-10min. A volume fraction of the silicon-based material in the stannum-silicon composite layer is 10%-20%.

Specifically, in step 5), a mass fraction of the carbon-based material in the third plating solution is 10%-20% and the carbon-based material is selected from a group consisting of carbon nanotubes, carbon nanofibers, carbon nanospheres, graphene, graphite, and combinations thereof.

Specifically, in step 5), the stirring process is taken under a stirring speed of 500-1000rmp and the ultrasonic treating process is carried out for 1-3h in an ultrasonic generator at a internal temperature of 40-60 °C.

Specifically, in step 6), the anode is a stannum plate with a purity of 99.9% or a titanium plate with a purity of 99.9% or a stainless steel plate with a purity of 99.9%. In step 6), the direct current has a current density of 2-3A/dm² and the plating time is 5-10min. A volume fraction of the carbon-based material in the stannum-carbon composite layer is 20%-40%.

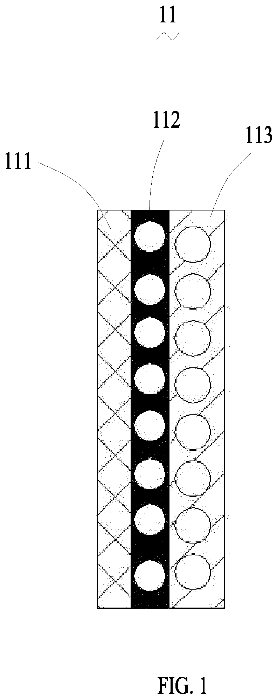

Referring to FIG. 1, the negative electrode 11 is the negative current collector 111 coated with the stannum-silicon composite layer 112 and the stannum-carbon composite layer 113, wherein the stannum-silicon composite layer 112 is positioned between the negative current collector 111 and the stannum-carbon composite layer 113.

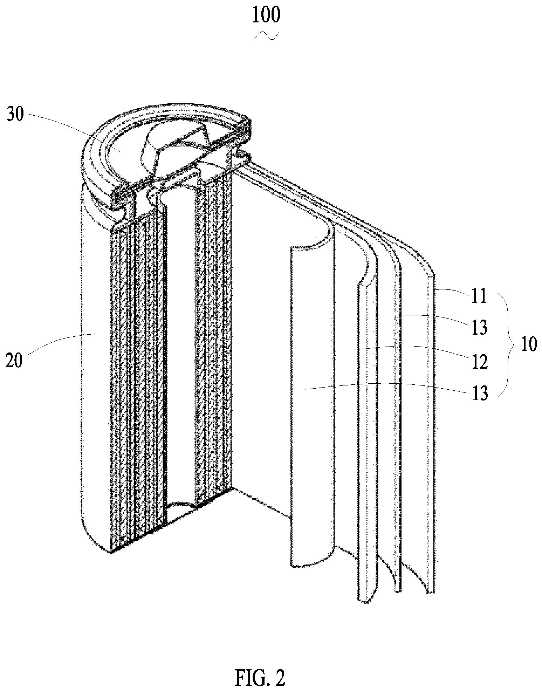

Referring to FIG. 2, one embodiment of the present application provides a lithium ion battery 100 comprising a shell 20 having an opening at one end, a winding core 10 positioned in the shell 20, electrolyte received in the shell 20 and immersing the winding core 10, and a cap cover 30 positioned in the opening for enclosing the opening; wherein the winding core 10 comprising the negative electrode 11, a positive electrode 12 and separators 13.

### Example:

1. adding ethylene diamine tetraacetic acid, stannaic sulphate, catechol, a grain refiner, a dispersing agent and a inorganic salt of nickel to water, and stirring to obtain a first plating solution, wherein the concentration of ethylene diamine tetraacetic acid in the first plating solution is 200g/L, the concentration of stannaic sulphate in the first plating solution is 50g/L, the concentration of catechol in the first plating solution is 11.5g/L, the concentration of the grain refiner in the first plating solution is 2.5g/L, the concentration of the dispersing agent in the first plating solution is 5g/L, and the concentration of the inorganic salt of nickel in the first plating solution is 25g/L;
2. immersing a copper foil in a chemical degreasing solution at a temperature of 65°C for 4min, wherein the chemical degreasing solution consists of sodium hydroxide, sodium carbonate, sodium silicate and water, and concentrations of sodium hydroxide, sodium carbonate and sodium silicate in the chemical degreasing solution separately are 7.5g/L, 17.5g/L and 17.5g/L; removing the copper foil from the chemical degreasing solution and washing by deionized water; then immersing the copper foil in an activating solution for 2min at room temperature, wherein the activating solution is composed of sulfuric acid solution with a mass fraction of 15% and hydrogen peroxide with a mass fraction of 1.5%; removing the copper foil from the activating solution and washing by deionized water to obtain a negative current collector;
3. dispersing nanometer silica into the first plating solution, stirring at a speed of 1250rmp, and ultrasonic treating in an ultrasonic generator at a internal temperature of 50°C for 2h to obtain a second plating solution, wherein the mass fraction of nanometer silica in the second plating solution is 7.5%;
4. immersing the negative current collector and a stainless steel plate with a purity of 99.9% in the second plating solution, plating with a direct current in a current density of 3A/dm² for 7.5min to obtain a negative current collector coated with a stannum-silicon composite layer, wherein the volume fraction of silicon in the stannum-silicon composite layer is 15%;
5. dispersing carbon nanotubes into the first plating solution, stirring at a speed of 750rmp, and ultrasonic treating in an ultrasonic generator at a internal temperature of 50°C for 2h to obtain a third plating solution, wherein the mass fraction of carbon nanotubes in the third plating solution is 15%;
6. immersing the negative current collector coated with a stannum-silicon composite layer and a stainless steel plate with a purity of 99.9% in the third plating solution, plating with a direct current in a current density of 2.5A/dm² for 7.5min to obtain a negative electrode, wherein the negative electrode is the negative current collector coated with a stannum-silicon composite layer and a stannum-carbon composite layer, and the volume fraction of carbon in the stannum-carbon composite layer is 30%;
7. winding the negative electrode, a positive electrode and separators into a winding core and sealing the winding core into a shell after injecting electrolyte to obtain a lithium ion battery.

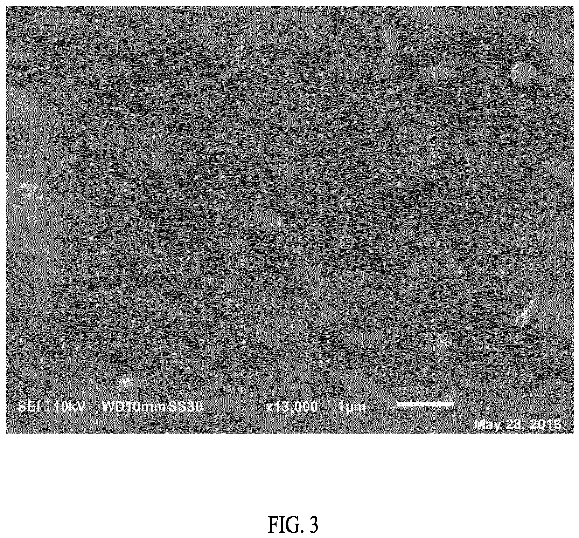

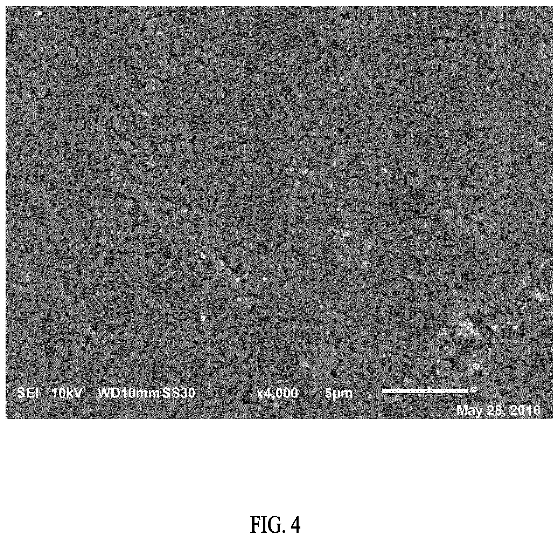

The stannum-silicon composite layer and the stannum-carbon composite layer prepared according to the above example were observed by scanning electron microscope. The SEM image of the stannum-silicon composite layer is shown in FIG.3 and the SEM image of the stannum-carbon composite layer is shown in FIG. 4.

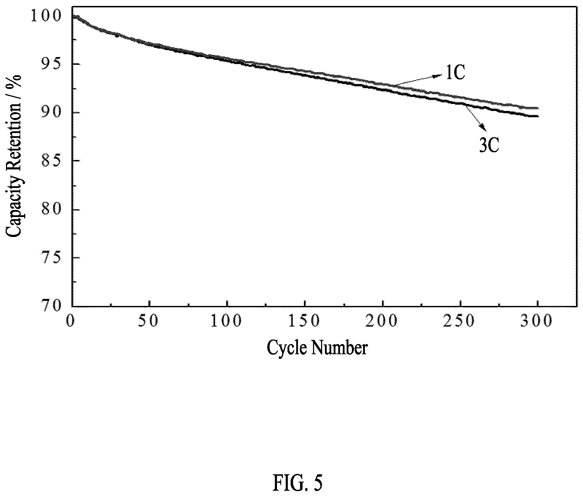

Cycle performance of the lithium ion battery prepared according to the above example was tested and cycle diagrams tested under 1C and 3C are shown in FIG. 5. As shown in FIG. 5, the lithium ion battery has a capacity retention rate of 90.49% of the initial capacity after being cycled at 1C for 300 cycles and a capacity retention rate of 89.61% of the initial capacity after being cycled at 3C for 300 cycles.

The negative electrode prepared according to the present application could be rapidly and uniformly formed at normal temperature by the method of electrodeposition of plating solution. The stannum-silicon layer and the stannum-carbon layer coated on the negative current collector may solve the problem of large volume change during charge and discharge processes, so as to improve the capacity and cycle performance of the lithium ion battery.

It should be understood that the above examples are only used to illustrate the technical concept and feature of the present application, and the purpose to thereof is familiarize the person skilled in the art to understand the content of the present application and carry it out, which cannot restrict the protection scope of the present invention based on above. Any equivalent transformation or modification made in the spirit of the present invention should all be included within the protection scope of the present application.

## Claims

1. A method for preparing negative electrode of lithium ion battery, comprising steps of:
1) adding a complexing agent, a stannum salt, a reducing agent, a grain refiner, a dispersing agent and a metal salt to water, and stirring to obtain a first plating solution;
2) immersing a copper foil in a chemical degreasing solution, removing the copper foil from the chemical degreasing solution and washing by water, and then immersing the copper foil in an activating solution, removing the copper foil from the activating solution and washing by water to obtain a negative current collector (111);
3) dispersing a silicon-based material into the first plating solution, stirring and ultrasonic treating to obtain a second plating solution;
4) taking the negative current collector (111) as a cathode and immersing the negative current collector (111) and an anode in the second plating solution, plating with a direct current to obtain a negative current collector (111) coated with a stannum-silicon composite layer (112);
5) dispersing a carbon-based material into the first plating solution, stirring and ultrasonic treating to obtain a third plating solution;
6) taking the negative current collector (111) coated with a stannum-silicon composite layer (112) as a cathode and immersing the negative current collector (111) coated with a stannum-silicon composite layer (112) and an anode in the third plating solution, plating with a direct current to obtain a negative electrode (11), wherein the negative electrode is a negative current collector (111) coated with a stannum-silicon composite layer (112) and a stannum-carbon composite layer (113).

2. The method for preparing negative electrode of lithium ion battery according to claim 1, wherein a concentration of the complexing agent in the first plating solution is 100-300g/L; a concentration of the stannum salt in the first plating solution is 20-80g/L; a concentration of the reducing agent in the first plating solution is 3-20g/L; a concentration of the grain refiner in the first plating solution is 0.1-5g/L; a concentration of the dispersing agent in the first plating solution is 1-10g/L; a concentration of the metal salt in the first plating solution is 0.1-50g/L.

3. The method for preparing negative electrode of lithium ion battery according to claim 2, wherein the complexing agent is selected from a group consisting of ethylene diamine tetraacetic acid, thiourea, allylthiourea, ethylenediamine, tetraethylenepentamine, sulfur-containing amino acid, and combinations thereof.

4. The method for preparing negative electrode of lithium ion battery according to claim 2, wherein the stannum salt is selected from a group consisting of stannaic sulphate, stannaic borofluoride, stannaic silicofluoride, stannaic sulfamate, stannaic hydrochloride, stannaic pyrophosphate, stannaic acetate, stannaic oxalate, stannaic malonate, stannaic succinate, stannaic glycolate, stannaic tartrate, stannaic citrate, and combinations thereof.

5. The method for preparing negative electrode of lithium ion battery according to claim 2, wherein the reducing agent is selected from a group consisting of catechol, resorcinol, hydroquinone, pyrogallol, hydroxy-hydroquinone, fluoroglycine, cresolsulfonic acid, catechol sulfonic acid, hydroquinone sulfonic acid, and combinations thereof.

6. The method for preparing negative electrode of lithium ion battery according to claim 2, wherein the metal salt is inorganic salt, organic salt or complex of silver, copper, gold, zinc, nickel or lead.

7. The method for preparing negative electrode of lithium ion battery according to claim 1, wherein the anode of step 4) is a stannum plate with a purity of 99.9% or a titanium plate with a purity of 99.9% or a stainless steel plate with a purity of 99.9%; the anode of step 6) is a stannum plate with a purity of 99.9% or a titanium plate with a purity of 99.9% or a stainless steel plate with a purity of 99.9%.

8. The method for preparing negative electrode of lithium ion battery according to claim 1, wherein the chemical degreasing solution consists of sodium hydroxide, sodium carbonate, sodium silicate and water.

9. The method for preparing negative electrode of lithium ion battery according to claim 8, wherein a concentration of the sodium hydroxide in the chemical degreasing solution is 5-10g/L; a concentration of the sodium carbonate in the chemical degreasing solution is 15-20g/L; a concentration of the sodium silicate in the chemical degreasing solution is 15-20g/L.

10. The method for preparing negative electrode of lithium ion battery according to claim 1, wherein the copper foil is immersed in the chemical degreasing solution at a temperature of 60-70°C for 3-5min.

11. The method for preparing negative electrode of lithium ion battery according to claim 1, wherein the activating solution is composed of sulfuric acid solution and hydrogen peroxide or hydrochloric acid solution and hydrogen peroxide.

12. The method for preparing negative electrode of lithium ion battery according to claim 11, wherein the sulfuric acid solution has a mass fraction of 10-20%; the hydrochloric acid solution has a mass fraction of 10-20%; the hydrogen peroxide has a mass fraction of 1-2%.

13. The method for preparing negative electrode of lithium ion battery according to claim 1, wherein the copper foil is immersed in the activating solution for 1-3min at room temperature.

14. The method for preparing negative electrode of lithium ion battery according to claim 1, wherein the silicon-based material is selected from a group consisting of nanometer silica, nanometer silicon, silicon nanotubes, porous silicon, and combinations thereof.

15. The method for preparing negative electrode of lithium ion battery according to claim 1, wherein the carbon-based material is selected from a group consisting of carbon nanotubes, carbon nanofibers, carbon nanospheres, graphene, graphite, and combinations thereof.

16. The method for preparing negative electrode of lithium ion battery according to claim 1, wherein a mass fraction of the silicon-based material in the second plating solution is 5%-10%; a volume fraction of the silicon-based material in the stannum-silicon composite layer (112) is 10%-20%.

17. The method for preparing negative electrode of lithium ion battery according to claim 1, wherein a mass fraction of the carbon-based material in the third plating solution is 10%-20%; a volume fraction of the carbon-based material in the stannum-carbon composite layer (113) is 20%-40%.

18. The method for preparing negative electrode of lithium ion battery according to claim 1, wherein the direct current of step 4) has a current density of 1-5A/dm² and the plating time is 5-10min; the direct current of step 6) has a current density of 2-3A/dm² and the plating time is 5-10min.

19. The method for preparing negative electrode of lithium ion battery according to claim 1, wherein the ultrasonic treating process of step 3) is carried out for 1-3h in an ultrasonic generator at a internal temperature of 40-60°C; the ultrasonic treating process of step 5) is carried out for 1-3h in an ultrasonic generator at a internal temperature of 40-60 °C.

20. A lithium ion battery (100), comprising a shell (20) having an opening at one end, a winding core (10) positioned in the shell (20), electrolyte received in the shell (20) and immersing the winding core (10), and a cap cover (30) positioned in the opening for enclosing the opening; the winding core (10) comprising a positive electrode (12), separators (12) and a negative electrode (11) prepared according to claim 1.
